# EUROPÄISCHE PATENTANMELDUNG

(11) **EP 2 213 211 A1**
(43) Veröffentlichungstag der Anmeldung: **04.08.2010**
(21) Anmeldenummer: 10151297.8
(22) Anmeldetag: 21.01.2010
(51) Int. Cl.: A47J 31/60

(54) **Tank**

(30) Priorität: 28.01.2009 DE 202009001015 U
(71) Anmelder: MELITTA HAUSHALTSPRODUKTE GmbH & Co. Kommanditgesellschaft, 32427 Minden (DE)
(72) Erfinder: Schmiedinghöfer, Stefan, 33378, Rheda-Wiedenbrück (DE)
(74) Vertreter: Dantz, Jan Henning

(57) **Zusammenfassung**

Ein Tank, insbesondere für ein Haushaltsgerät, mit einem Innenraum zur Befüllung mit einer Flüssigkeit, wobei ein Photosensibilisator zur Entkeimung von Wasser und anderen Flüssigkeiten unter Lichteinfluss vorgesehen ist. Der Tank besteht aus einem Formkörper aus Kunststoff, wobei der Formkörper aus einem Kunststoff-Photosensibilisatorgemisch besteht und/oder innenseitig mit einem Photosensibilisator zumindest teilweise beschichtet ist.

## Beschreibung

Die Erfindung betrifft einen Tank nach dem Oberbegriff des Anspruchs 1.

Eine Entkeimung von Wasser, welches durch Kontakt mit Umgebungsluft zur Keimbildung tendiert, kann durch chemische und physikalische Reinigungsmethoden erfolgen. Die Verwendung von Chemikalien im Bereich der Haushaltsgeräte ist oftmals nur eingeschränkt möglich, da sich dadurch meist eine geschmackliche Veränderung des Wassers, wie beispielsweise bei der Chlorierung, ergibt. Zudem setzt der Einsatz von antibakteriellen Chemikalien oftmals eine präzise Dosierung voraus, da die Chemikalien oder deren Abbauprodukte im Anschluss in den menschlichen Organismus gelangen können.

Weitere alternative chemisch-physikalische Verfahren, welche Wasser, durch Sterilisation, UV-Bestrahlung oder Generierung von Ozon entkeimen, sind bei Haushaltsgeräten nur durch zusätzlichen apparativen Aufwand und hohen Energieverbrauch realisierbar. Eine Filtration macht zudem ein häufiges Überprüfen und Auswechseln der Filter notwendig.

Es ist daher Aufgabe der Erfindung einen Tank insbesondere in Haushaltsgeräten zur Aufbewahrung von Wasser und anderen Flüssigkeiten zu schaffen, welcher gleichzeitig eine Reinigung und Entkeimung von Flüssigkeiten ohne größeren apparativen Aufwand oder Beeinflussung des Geschmacks vornimmt.

Die Erfindung löst diese Aufgabe durch die Merkmale des Anspruchs 1.

Ein erfindungsgemäßer Tank zur Befüllung mit Flüssigkeiten, insbesondere für die Anwendung in Haushaltsgeräten, weist dabei, zusätzlich zu den herkömmlichen Materialien, Photosensibilisatormoleküle auf. Dadurch wird es erreicht, dass Wasser oder anderen Flüssigkeiten, durch die katalytische Bildung insbesondere von Singulettsauerstoff in Folge einer photochemischen Reaktion der Photosensibilisatormoleküle unter Aufnahme einer diskreten Energie (Lichtphotonen), von Keimen befreit wird. Dies beugt einem Pilzbefall und Algenwachstum im Wasserbehälter vor, was bei stehendem Wasser über einen längeren Zeitraum vorkommt. Darüber hinaus werden Bakterien, welche sich möglicherweise im Wasser befinden, abgetötet.

Durch das Einbringen von Photosensibilisatoren als Bestandteil des Tanks, kann eine Entkeimung der Flüssigkeiten, welche sich in dem Tank befinden ohne zusätzlichen apparativen Aufwand geschehen, was eine universelle Anwendung ermöglicht, welche nicht stromgebunden ist. Somit kann man den Tank in jedes flüssigkeitsführendes Hausgerät integrieren. Zudem können die erfindungsgemäßen Tanks durch industriellen Serienfertigung hergestellt werden.

Es ist vorteilhaft zur Herstellung des Formkörpers Kunststoff zu verwenden, da bei Kunststoff verschiedene vorteilhafte Materialeigenschaften, wie beispielsweise leichte Verformbarkeit und chemische Inertheit gegenüber Wasser gegeben ist. Kunststoff ist zudem meist leichter als vergleichbare Stahlbehälter.

Besonders vorteilhaft ist es, wenn der Formkörper aus einem Kunststoff- Photosensibilisatorgemisch besteht, wobei die Entkeimung der Algen und Bakterien an der Oberfläche des Tanks erfolgt. Da der Photosensibilisator fest in das Kunststoffmaterial integriert ist, kann er einerseits nicht durch Abrieb bei der mechanischen Reinigung entfernt werden und sorgt andererseits, bei Verwendung von metallkoordinierten Photosensibilisatoren für einen optischen Effekt durch verschiedene Farbvarianten.

In einer weiteren vorteilhaften Ausgestaltungsvariante ist der Innenraum des Formkörpers zumindest teilweise mit einem Photosensibilisator, beispielsweise als Lack, beschichtet. Dadurch erfolgt eine katalytische Bildung insbesonders von Singulettsauerstoff entlang einer großen Fläche im Innenraum des Formkörpers und kann anschließend direkt in Kontakt mit der zu entkeimenden Flüssigkeit treten. Diese Beschichtung kann gegebenenfalls auch nachträglich an bereits bestehenden Tanks vorgenommen werden.

Es ist vorteilhaft, wenn der Formkörper zumindest teilweise lichtdurchlässig ist, da somit auf ökologische und effiziente Art und Weise auch Tageslicht als Energiequelle für den Photosensibilisator genutzt werden kann.

Der Tank kann weiterhin durch Pigmentbeimengungen farblich variiert werden.

In einer bevorzugten Ausführungsform ist mindestens ein Photosensibilisator des Tanks ein Phthalocyanin. Diese Klasse der makrocyclischen Verbindungen zeichnet sich durch ihre hohe thermische und chemische Stabilität aus, wodurch sie weder während der Produktion des Tanks noch durch Substanzen bei einer eventuellen chemischen Reinigung angegriffen werden. Dadurch kann der Tank beispielsweise bei Verschmutzung in einer herkömmlichen Spülmaschine gereinigt werden. Phthalocyanine sind wasserunlöslich und können somit nicht aus dem Material des Tank durch Wasser herausgelöst werden und in den menschlichen Organismus gelangen,

Die Wirkung der photochemischen Reaktion und die Abstimmung der Absorption von Lichtenergie auf eine spezifische Wellenlänge kann durch eine Koordination der Phthalocyanine mit Metallionen derart vorteilhaft beeinflusst werden, dass je nach Metallion eine bestimmte Wellenlänge wählbar ist, welche absorbiert werden kann. Dadurch kann man die Photosensibilatormoleküle für die Absorption auf bestimmte Leuchtmittel und Lampen mit eingeschränkten Emissionsbanden abgleichen und somit optimieren.

Um einen zusätzlich vorteilhaften optischen Effekt zu erreichen, kann eine Koordination von Aluminium-, Zink-, Kupfer-, Cobalt- oder Nickelionen durch die Phthalocyaninmoleküle zu Koordinationsverbindungen erfolgen, welche anschließend als Pigmente beispielsweise blau oder grün gefärbt vorliegen und Licht mit der entsprechenden komplementären Farbe absorbieren.

Darüber hinaus ist ein erfindungsgemäßes Haushaltsgerät, welches einen Tank vorsieht, derart ausgebildet, dass in dem Tank Photosensibilisatoren zur Entkeimung von Wasser und anderen Flüssigkeiten vorgesehen sind.

Dabei ist in dem Haushaltsgerät LED Lampen derart am Tank oder dessen Umgebung angeordnet, dass sie eine Beleuchtung des Tanks ermöglichen. Somit ist eine durchgängige Entkeimung, unabhängig vom Tageslicht, gewährleistet. Die Vorteile der LED-Beleuchtung, anders als bei Glühbirnen, liegen in deren geringem Energieverbrauch und bei hoher Lichtintensität in einem beschränkten Wellenlängenbereich. Somit kommt es bei Abstimmung der LED-Emissionsstrahlen und der Absorptionswellenlänge des Photosensibilisators zu einer hohen Umwandlungsrate während der photochemischen Reaktion, und daher zu einer effizienten Entkeimung der jeweiligen Flüssigkeit.

In einer besonders bevorzugten Ausführungsform entspricht das Emissionsmaximum des emittierten Wellenlängenbereichs der LED-Lampen dem Absorptionsmaximum der Photosensibilisatoren, um somit eine hohe Energie für die photochemische Reaktion zur katalytische Bildung insbesonders von Singulettsauerstoff bereitzustellen.

Vorteilhafterweise ist der Tank in dem Haushaltsgerät in einer dafür ausgeformten Aufnahme lösbar gehalten. Dadurch ist der Tank bei einem Defekt, beispielsweise einem Bruch oder Riss, auswechselbar. Zudem ermöglicht es die Entnahme des Tanks um an anderer Stelle Wasser oder andere Flüssigkeiten aus einem Reservoir nachzufüllen.

Ein Ausführungsbeispiel der Erfindung wird anhand der beigefügten Zeichnung erläutert. Es zeigt:

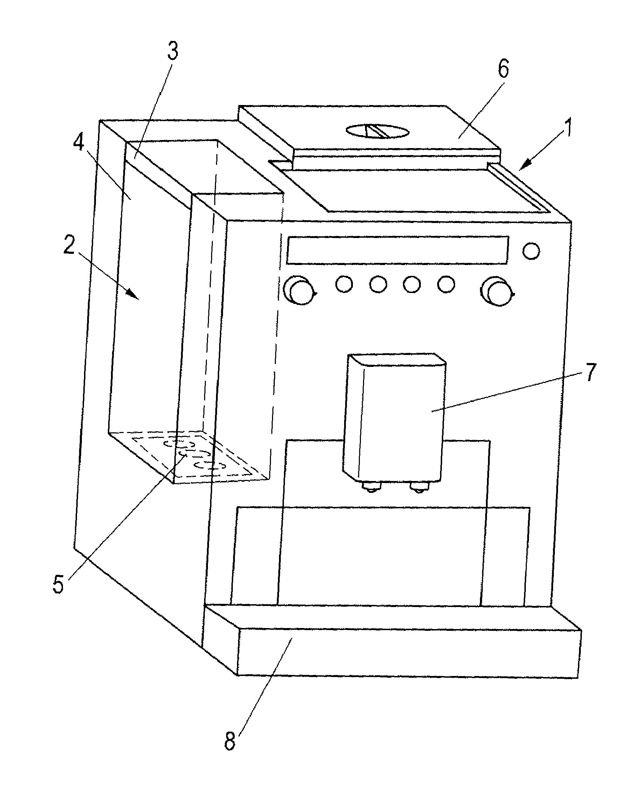

- Fig. 1: eine Außenansicht eines erfindungsgemäßen Haushaltsgerätes einem erfindungsgemäßen Tank

Fig. 1 zeigt ein erfindungsgemäßes Haushaltsgerät in Form eines Kaffeevollautomaten 1. Er verfügt über einen Tank 2 bestehend aus einer Abdeckung 3 und einem Formkörper 4 aus Kunststoff. Der Formkörper enthält zudem Beimengungen von blauen Pigmenten welche durch Koordination von Metallionen mit einem Phthalocyanin, einem Photosensibilisator, entsteht. Dadurch ist der Kunststoffformkörper durchscheinend blau. Der Photosensibilisator absorbiert dabei elektromagnetische Strahlung in Form von Licht und gibt diese Energie strahlungsfrei an Atome und Moleküle weiter, welche dadurch in einen energiereicheren Zustand versetzt werden.

Füllt man nun keimhaltiges Wasser in den Tank 2 so kommt es zu einer photochemischen Reaktion. Nach der Absorption von elektromagnetischer Strahlung die entweder durch Umgebungslicht, welches auf den Tank einwirkt, oder durch LED Leuchtmittel 5 emittiert wird, durch den Photosensibilisator, bilden sich katalytisch Singulettsauerstoff und kurzlebigen Radikale aus. Diese führen zum Absterben der Keime, der Nekrose und der Apoptose.

Die LED Leuchtmittel 5 sind unterhalb des Tanks befestigt. Der Kaffeeautomaten erhitzt das nunmehr keimfreie Wasser. Eine Kaffeemühle 6 zerkleinert Kaffeebohnen und gibt sie an eine Brühvorrichtung weiter. Nach dem Brühvorgang, gibt eine Ausgabeeinheit 7 den fertigen Kaffee in eine Tasse oder einen Becher aus.

Die Tasse oder der Becher mit dem Kaffee steht dabei auf einer Tropfenauffangvorrichtung 8.

Der Tank wurde im Zusammenhang mit einem Kaffeevollautomaten beschrieben. Es ist darüber hinaus auch möglich, den Tank für andere Getränkeausgabegeräte zu verwenden, insbesondere dort, wo es zu einer längerfristigen Keimbildung von Wasser mit Luftkontakt kommen kann.

Weitere Möglichkeiten einer Anwendung sind im Bereich der Trinkwasserspender zu finden, bei welchen Wasser bereits in vorgefertigten Tanks geliefert wird.

Es ist zudem möglich kleine Kühlaggregate, beispielsweise als gefüllte Dauereiskugeln an einem Tank zu befestigen oder schwimmend in einen Tank einzubringen, wobei die Kunststoffhüllen der Dauereiskugeln einen Photosensibilisator aufweisen.

Eine hohe Keimbelastung ist bei Wassertanks zu erwarten, welche in Dampfreinigern zum Einsatz kommen. Dies ist besonders dann der Fall, wenn nach dem Ausblasen des Wasserdampfes und der Oberflächenreinigung, eine Ansaugung des Wasserdampfes erfolgt. Eingesaugte Keime erhalten somit die Möglichkeit sich im feuchtwarmen Milieu des Dampfreinigers auszubreiten. Dies kann durch den Einsatz eines erfindungsgemäßen Tanks weitgehend eingeschränkt werden.

Ähnlich verhält es sich mit Hochdruckreinigungsgeräten, welche nach dem Gebrauch teilweise über einen längeren Zeitraum ungenutzt bleiben und sich Keime aufgrund von Restfeuchte im Gerät vermehren können.

### Bezugszeichen

- 1: Kaffeevollautomat
- 2: Tank
- 3: Abdeckung
- 4: Formkörper
- 5: LED Leuchtmittel
- 6: Kaffeemühle
- 7: Ausgabeeinheit
- 8: Tropfenauffangvorrichtung

## Patentansprüche

1. Tank, insbesondere für ein Haushaltsgerät, mit einem Innenraum zur Befüllung mit einer Flüssigkeit, der aus einem Formkörper aus Kunststoff besteht, bei dem ein Photosensibilisator zur Entkeimung von Wasser und anderen Flüssigkeiten unter Lichteinfluss vorgesehen ist, **dadurch gekennzeichnet, dass** der Formkörper aus einem Kunststoff- Photosensibilisatorgemisch besteht und/oder innenseitig mit einem Photosensibilisator zumindest teilweise beschichtet ist.

2. Tank nach Anspruch 1, **dadurch gekennzeichnet, dass** der Tank (2) zumindest teilweise lichtdurchlässig ist.

3. Tank nach Anspruch 1 oder 2, **dadurch gekennzeichnet, dass** der Formkörper mit Pigmenten eingefärbt ist.

4. Tank nach einem der vorhergehenden Ansprüche, **dadurch gekennzeichnet, dass** mindestens ein Photosensibilisator ein Phthalocyanin ist.

5. Tank nach Anspruch 4, **dadurch gekennzeichnet, dass** das Phthalocyanin ein oder mehrere Metallionen koordiniert,

6. Tank nach Anspruch 5, **dadurch gekennzeichnet, dass** das Phthalocyanin ein Aluminium", Zink-, Cobalt- oder Nickelion koordiniert.

7. Haushaltsgerät, **dadurch gekennzeichnet, dass** es einen Tank (2) nach einem der vorhergehenden Ansprüche aufweist.

8. Haushaltsgerät nach Anspruch 7, **dadurch gekennzeichnet, dass** am Tank (2) oder in dessen Umgebung LED Leuchtmittel (5) zur Beleuchtung des Tanks (2) angebracht sind.

9. Haushaltsgerät nach den Ansprüchen 7 und 8, **dadurch gekennzeichnet, dass** die LED Lampen Licht einer spezifischen Wellenlänge ausstrahlen, welches eine elektrochemischen Reaktion durch mindestens einen Photosensibilisator auslöst.

10. Haushaltsgerät nach einem der vorhergehenden Ansprüche, **dadurch gekennzeichnet, dass** der Tank (2) in einer Aufnahme lösbar verankert ist.
